# FASCICULE DE BREVET EUROPEEN

(11) **EP 1 291 206 B1**
(45) Date de publication et mention de la délivrance du brevet: **07.05.2008**
(21) Numéro de dépôt: 02292192.8
(22) Date de dépôt: 06.09.2002
(51) Int. Cl.: B60H 1/00, H01M 8/04

(54) **Dispositif de gestion thermique, notamment pour véhicule automobile**
Vorrichtung zur Temperaturregelung, insbesondere für ein Kraftfahrzeug
Device for thermal management, especially for a motor vehicle

(30) Priorité: 07.09.2001 FR 0111603
(43) Date de publication de la demande: 12.03.2003
(73) Titulaire: RENAULT S.A.S., 92109 Boulogne Billancourt (FR)
(72) Inventeur: Samuel, Sébastien, 78000 Versailles (FR); Olivier, Gérard, 78380 Bougival (FR); Oulefki, Abdelhakim, 93300 Aubervilliers (FR)

(56) Documents cités:
- EP-A- 0 595 714
- DE-A- 19 542 125
- FR-A- 2 766 261
- FR-A- 2 780 490
- US-A- 5 265 437

## Description

L'invention concerne un dispositif de gestion thermique d'au moins un premier échangeur thermique, notamment pour un véhicule automobile, comportant un circuit primaire frigorigène dans lequel est amené à circuler un fluide frigorigène et dans lequel sont insérés en série au moins un compresseur, un condenseur, un détendeur et un évaporateur, un circuit secondaire dans lequel est amené à circuler un fluide caloporteur et dans lequel sont insérés au moins ledit premier échangeur thermique, et ledit condenseur ou ledit évaporateur, ledit circuit secondaire comportant des moyens de mise en circulation dudit fluide caloporteur.

On connaît de la demande de brevet FR 0002771 déposée par la Demanderesse le 3 Mars 2000 un dispositif de gestion thermique d'une pluralité d'échangeurs thermiques pouvant se présenter dans un véhicule automobile équipé d'un moteur de type pile à combustible. Ces échangeurs, en relation d'échange thermique avec des organes du véhicule devant être chauffés et/ou refroidis, par exemple l'habitacle du véhicule, la pile à combustible, les batteries, le moteur électrique, ou un groupe de composants électroniques, sont insérés dans un circuit frigorigène dans lequel est amené à circuler un fluide frigorigène et dans lequel sont également insérés une pluralité de détendeurs, un compresseur et des moyens de régulation du débit et du sens de circulation du fluide frigorigène à travers les différents échangeurs.

Le circuit frigorigène de ce dispositif est agencé de manière que, sélectivement selon le réglage des moyens de régulation du débit et du sens de circulation du fluide frigorigène à travers un échangeur, le fluide frigorigène se condense ou s'évapore dans ce dernier en produisant de l'énergie calorifique ou frigorifique, respectivement.

L'énergie calorifique ou frigorifique ainsi produite peut alors, par exemple, être transportée, par l'intermédiaire d'un fluide caloporteur circulant dans un deuxième circuit, jusqu'à un organe du véhicule inséré dans ce deuxième circuit et devant être chauffé ou refroidi, respectivement.

Les besoins thermiques étant variables, en nature et en quantité, d'un organe à l'autre, le circuit frigorigène comporte autant d'échangeurs thermiques et de détendeurs qu'il y a d'organes à gérer. Un grand volume de fluide frigorigène est donc nécessaire. Or le fluide frigorigène est très coûteux. De plus, il est peu écologique et les nombreuses conduites connectant entre eux les différents composants du circuit augmentent le risque de fuite et de rejet dans l'environnement.

Le document EP 595 714 décrit un dispositif de climatisation pour véhicule électrique. Le dispositif décrit un circuit de fluide réfrigérant liquide-vapeur comportant un évaporateur et un condenseur de type fluide-liquide. Un circuit de liquide est modulable et permet de faire circuler le liquide dans une configuration d'été et une configuration d'hiver. Le circuit modulable comprend quatre branches dont l'une passe par l'évaporateur, une autre par le condenseur, une troisième passe par un radiateur extérieur et la quatrième passe par un échangeur thermique d'habitacle.

Le but de la présente invention est de fournir un dispositif de gestion thermique ne nécessitant qu'un volume restreint de fluide frigorigène.

On atteint ce but au moyen d'un dispositif de gestion thermique d'au moins un premier échangeur thermique, notamment pour un véhicule automobile, comportant un circuit primaire frigorigène dans lequel est amené à circuler un fluide frigorigène et dans lequel sont insérés en série au moins un compresseur, un condenseur, un détendeur et un évaporateur, un circuit secondaire dans lequel est amené à circuler un fluide caloporteur et dans lequel sont insérés au moins ledit premier échangeur thermique, et ledit condenseur ou ledit évaporateur, ledit circuit secondaire comportant des moyens de mise en circulation dudit fluide caloporteur, remarquable en ce que ledit circuit secondaire comporte des première, deuxième et troisième branches parallèles dans lesquelles sont insérés ledit premier échangeur, ledit condenseur et ledit évaporateur, respectivement, ledit circuit secondaire comportant en outre des moyens de connexion sélective de ladite première branche avec ladite deuxième branche ou ladite troisième branche, de manière à pouvoir sélectivement chauffer dans ledit condenseur ou refroidir dans ledit évaporateur le fluide caloporteur destiné à traverser ledit premier échangeur.
- ledit circuit secondaire comporte au moins une quatrième branche dans laquelle est inséré au moins un deuxième échangeur, et des moyens de connexion sélective de ladite quatrième branche avec ladite deuxième branche ou ladite troisième branche quand ladite première branche est connectée sélectivement avec ladite troisième branche ou ladite deuxième branche, respectivement, de manière à constituer deux sous-circuits indépendants, et des moyens de mise en circulation dudit fluide caloporteur dans lesdits sous-circuits,
- ledit circuit secondaire comporte au moins une cinquième branche dans laquelle est inséré un troisième échangeur, des moyens de connexion sélective de ladite cinquième branche avec une desdites deuxième et troisième branches de manière à constituer un premier sous-circuit, des moyens de connexion sélective de ladite première branche avec ladite quatrième branche et/ou avec l'autre desdites deuxième et troisième branches de manière à constituer un deuxième sous-circuit indépendant dudit premier sous-circuit, et des moyens de mise en circulation dudit fluide caloporteur dans lesdits premier et deuxième sous-circuits,

La régulation thermique de l'échangeur, et notamment la sélection de la production d'énergie calorifique ou d'énergie frigorifique dans cet échangeur, s'effectue donc, comme on le verra plus en détail par la suite, par action sur les moyens de connexion sélective. Le circuit frigorigène peut ainsi ne comporter qu'un compresseur, un condenseur, un détendeur et un évaporateur insérés en série dans une boucle courte. Le volume de fluide frigorigène est ainsi réduit à une quantité minimale.

L'énergie calorifique ou frigorifique destinée audit premier échangeur est transportée par ledit fluide caloporteur, par exemple de l'eau glycolée, dont le coût est faible et dont la mise en oeuvre est peu contraignante. Le fluide caloporteur, relativement écologique par rapport au fluide frigorigène, peut en effet être mis en circulation sous faible pression.

Selon d'autres caractéristiques de la présente invention,
- lesdits moyens de connexion sélective desdites première et quatrième branches avec lesdites deuxième et troisième branches comportent deux vannes à quatre voies insérées aux deux points de jonction desdites première, deuxième, troisième et quatrième branches,
- ledit circuit secondaire comporte des moyens de connexion sélective de ladite première branche avec l'une ou plusieurs desdites deuxième, troisième et quatrième branches,
- ledit circuit secondaire comporte au moins une sixième branche dans laquelle est inséré un quatrième échangeur, des moyens de connexion sélective de ladite cinquième branche avec une desdites deuxième et troisième branches de manière à constituer un premier sous-circuit; des moyens de connexion sélective de ladite première branche avec l'autre desdites deuxième et troisième branches de manière à constituer un deuxième sous-circuit indépendant dudit premier sous-circuit, des moyens de connexion sélective de ladite quatrième branche avec ladite sixième branche de manière à constituer un troisième sous-circuit indépendant desdits premier et deuxième sous-circuits, et des moyens de mise en circulation dudit fluide caloporteur dans lesdits premier, deuxième et troisième sous-circuits,
- ledit circuit secondaire comporte au moins une septième branche de dérivation dudit échangeur et des moyens de réglage du débit dudit fluide caloporteur dans ladite branche de dérivation,
- un échangeur est un aérotherme traversé par de l'air destiné à circuler dans un habitacle dudit véhicule,
- un échangeur est un radiateur en relation d'échange thermique avec l'extérieur dudit véhicule,
- un échangeur est en relation d'échange thermique avec un moteur,
- un échangeur est en relation d'échange thermique avec au moins une batterie dudit véhicule,
- un échangeur est en relation d'échange thermique avec un groupe de composants électroniques dudit véhicule,
- un échangeur est en relation d'échange thermique avec un condenseur d'eau,
- un échangeur est en relation d'échange thermique avec un déshumidificateur,
- un système de stockage de froid est inséré dans au moins une desdites branches, ledit circuit secondaire comportant en outre une branche de dérivation dudit système de stockage de froid et des moyens de régulation du débit dudit fluide caloporteur dans ledit système de stockage de froid et dans ladite branche de dérivation,
- au moins deux aérothermes de puissances d'échange thermique différentes et destinés au chauffage et à la climatisation dudit habitacle sont insérés respectivement dans deux desdites première, deuxième, troisième, quatrième, cinquième et sixième branches,
- le dispositif comporte une conduite d'amenée d'air aux deux dits aérothermes, un premier volet disposé dans la trajectoire dudit air et dont la position détermine les fractions dudit air dirigées vers chacun des deux dits aérothermes, et un deuxième volet disposé dans la trajectoire de l'air ayant traversé l'un desdits aérothermes et dont la position détermine les fractions dudit air évacuées vers l'extérieur et vers ledit habitacle,
- le moteur en relation d'échange thermique avec l'échangeur est une pile à combustible.

D'autres caractéristiques et avantages de la présente invention apparaîtront à la lecture de la description qui va suivre et à travers du dessin annexé dans lequel :
- les figures 1 à 4 représentent schématiquement le dispositif selon l'invention dans différents modes de fonctionnement,
- la figure 5 représente un détail du dispositif selon l'invention illustrant la disposition et le fonctionnement de deux échangeurs particuliers.

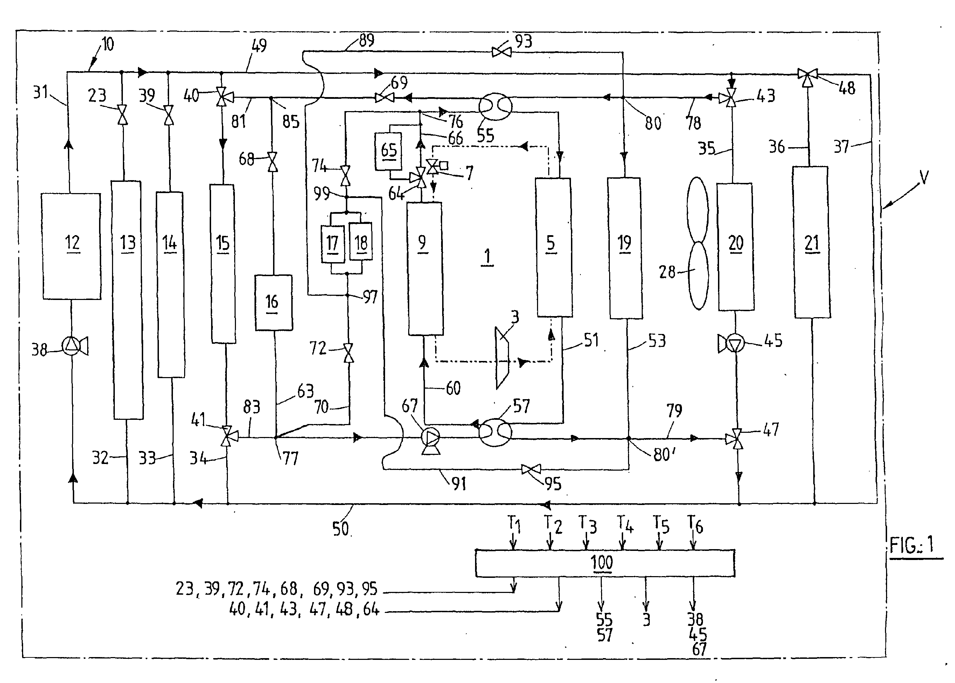

Le dispositif représenté sur les figures 1 à 4 comporte un circuit primaire ou circuit frigorigène 1, dans lequel est amené à circuler un fluide frigorigène et dans lequel sont insérés en série au moins un compresseur 3, un condenseur 5, un détendeur 7 et un évaporateur 9.

Le condenseur 5 et l'évaporateur 9 sont également insérés dans un circuit secondaire 10 dans lequel est amené à circuler un fluide caloporteur, par exemple de l'eau distillée.

Dans le circuit secondaire 10 sont également insérés une pluralité d'échangeurs thermiques en relation thermique avec une pluralité d'organes d'un véhicule V, chaque couple échangeur-organe définissant une unité fonctionnelle.

Quand le fluide caloporteur est compatible avec un organe, il peut être en contact avec lui, l'échangeur et l'organe étant alors confondus. Au contraire, s'il y a incompatibilité, la relation d'échange thermique entre un organe et un échangeur peut être réalisée par l'intermédiaire d'un fluide caloporteur comme par exemple de l'air ou de l'huile.

Pour plus de clarté, seuls les échangeurs des différentes unités fonctionnelles du véhicule V ont été représentés.

Dans la description qui va suivre, le moteur du véhicule est un moteur de type pile à combustible. L'invention peut être mise en oeuvre dans un véhicule équipé d'un moteur à combustion interne classique.

Le circuit secondaire 10 comporte dix échangeurs 12 à 21.

L'échangeur 12 ou "échangeur de pile" est en relation d'échange thermique avec la pile à combustible pour maintenir sa température dans une plage de fonctionnement optimal. Il est éventuellement confondu avec la pile elle-même.

L'échangeur 13, ou "régénérateur de déshumidificateur", est sélectivement en relation d'échange thermique avec un déshumidificateur d'air de manière à le régénérer, c'est-à-dire à évaporer l'eau qu'il a condensée, par exemple en déshumidifiant l'air destiné à être refroidi par le dispositif de climatisation de l'habitacle du véhicule V. L'échangeur 13 est associé à une vanne 23.

Les échangeurs 14 et 16, l'échangeur 16 étant encore appelé « aérotherme », sont en relation d'échange thermique avec l'habitacle du véhicule V. L'échangeur 14 est un échangeur fluide caloporteur - air disposé de manière à être traversé par l'air extrait de l'habitacle.

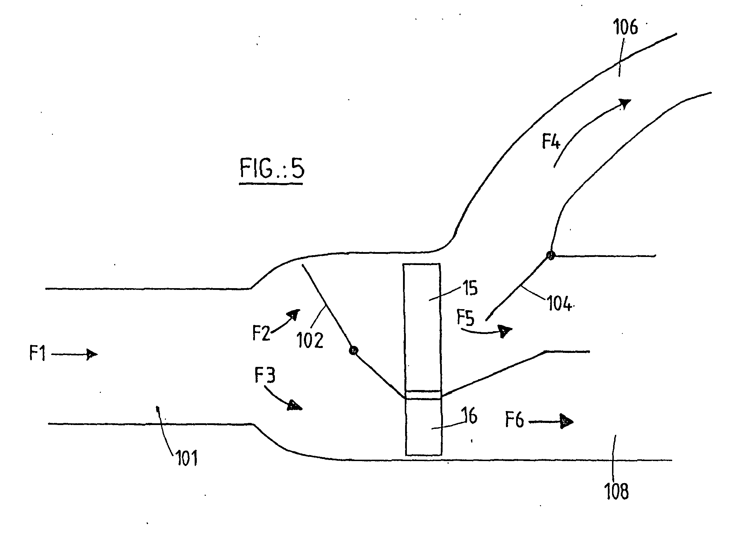

L'échangeur 15, également appelé aérotherme, peut être sélectivement en relation d'échange thermique avec l'habitacle du véhicule V ou avec l'extérieur, comme on le verra plus en détail dans la suite de la description (figure 5).

Les échangeurs 17 et 18, montés parallèlement l'un à l'autre, sont en relation d'échange thermique avec une ou plusieurs batteries et avec un groupe de composants électroniques, respectivement.

L'échangeur 19, ou "condenseur d'eau", est destiné à condenser la vapeur d'eau en sortie de la pile à combustible pour qu'elle puisse être réutilisée.

Enfin les échangeurs 20 et 21, ou "premier et deuxième radiateurs", respectivement, sont en relation d'échange thermique avec l'air extérieur.

De préférence, les échangeurs 20 et 21 sont associés à un ventilateur 28.

Pour la clarté de la description, on considère que le circuit secondaire 10 est constitué de trois circuits élémentaires branchés entre eux.

Le premier circuit élémentaire comporte sept branches parallèles 31 à 37. Dans les six branches 31 à 36 sont insérés respectivement l'échangeur de pile 12 et une pompe 38, le régénérateur de déshumidificateur 13 et la vanne 23, l'échangeur 14 et une vanne 39, l'aérotherme 15 associé d'un côté à une vanne à trois voies 40, de l'autre à une vanne à trois voies 41, le premier radiateur 20 associé d'un côté à une vanne à trois voies 43, de l'autre à une pompe de circulation 45 et à une vanne à trois voies 47, et le deuxième radiateur 21, associé à une vanne à trois voies 48.

La septième branche 37 est une branche de dérivation du deuxième radiateur 21. Elle est connectée à la vanne à trois voies 48.

Les branches 31 à 37 sont connectées entre elles par des première et deuxième branches communes, 49 et 50 respectivement, la branche commune 49 étant connectée à la vanne à trois voies 48.

Le deuxième circuit élémentaire comporte deux branches parallèles 51 et 53 connectées entre elles par l'intermédiaire de première et deuxième vannes à quatre voies, 55 et 57 respectivement, et dans lesquelles sont insérés le condenseur 5 et le condenseur d'eau 19, respectivement.

Le troisième circuit élémentaire comporte deux branches parallèles 60 et 63 connectées entre elles par l'intermédiaire des deux vannes à quatre voies 55 et 57.

Dans la branche 60 sont insérés en série l'évaporateur 9, une vanne à trois voies 64 et un système de stockage de froid 65, par exemple un ballon permettant de stocker des frigories apportées par le fluide caloporteur refroidi lors de la traversée de l'évaporateur 9. La vanne 64 est en outre connectée à une branche de dérivation 66 du système de stockage de froid 65, de manière à servir de moyen de régulation du débit du fluide caloporteur dans le système de stockage 65 et dans la branche de dérivation 66.

Dans la branche 63 sont insérés successivement une pompe 67, l'aérotherme 16 et deux vannes 68 et 69.

Le troisième circuit élémentaire comporte en outre une troisième branche 70 dans laquelle sont insérés en série une vanne 72, l'ensemble formé par les échangeurs 17 et 18 et une vanne 74. La branche 70 est connectée d'une part à la branche 60 en un point 76 localisé entre le système de stockage 65 et la vanne à quatre voies 55, et d'autre part à la branche 63 en un point 77 localisé entre la pompe 67 et l'aérotherme 16.

Les premier et deuxième circuits élémentaires sont branchés entre eux par les branches de connexion 78 et 79. La branche de connexion 78 est connectée d'une part en un point 80 de la branche 53 localisé entre le condenseur d'eau 19 et la vanne à quatre voies 55 et d'autre part à la vanne trois voies 43.

La branche de connexion 79 est connectée d'une part en un point 80' de la branche 53 localisé entre le condenseur d'eau 19 et la vanne à quatre voies 57, et d'autre part à la vanne à trois voies 47.

Les premier et troisième circuits élémentaires sont branchés entre eux par des branches de connexion 81 et 83.

La branche de connexion 81 est connectée d'une part à la vanne à trois voies 40 et d'autre part en un point de connexion 85 localisé sur la branche 63 entre les vannes 68 et 69.

La branche de connexion 83 est connectée d'une part à la vanne à trois voies 41 et d'autre part au point de connexion 77 localisé sur la branche 63 entre la pompe 67 et l'aérotherme 16 du troisième circuit élémentaire.

Le deuxième et troisième circuits élémentaires sont également connectables entre eux par l'intermédiaire des vannes à quatre voies 55 et 57. Les branchements à la vanne 55 sont déterminés de manière à autoriser, sélectivement selon sa position, une circulation du fluide caloporteur entre le condenseur 5 et le condenseur d'eau 19 d'une part et entre l'évaporateur 9 et la vanne 69 d'autre part, ou une circulation du fluide caloporteur entre le condenseur 5 et la vanne 69 d'une part et entre l'évaporateur 9 et le condenseur d'eau 19 d'autre part.

Les branchements de la vanne 57 sont déterminés de manière à autoriser, sélectivement selon sa position, une circulation du fluide caloporteur ente le condenseur 5 et le condenseur d'eau 19 d'une part et entre l'évaporateur 9 et la pompe 67 d'une part, ou une circulation du fluide caloporteur entre le condenseur 5 et la pompe 67 d'une part et entre l'évaporateur 9 et le condenseur d'eau 19 d'autre part.

Le deuxième et troisième circuits élémentaires sont également branchés entre eux par l'intermédiaire des branches de connexion 89 et 91 dans lesquels sont insérés des vannes 93 et 95, respectivement.

La branche de connexion 89 est branchée d'une part au point de connexion 80 du deuxième circuit élémentaire et d'autre part à la branche 70 du troisième circuit élémentaire en un point 97 localisé entre la vanne 72 et l'ensemble formé par les échangeurs 17 et 18.

La branche de connexion 91 est branchée d'une part au point de connexion 80' du deuxième circuit élémentaire et d'autre part à la branche 70 du troisième circuit élémentaire en un point 99 localisé entre la vanne 74 et l'ensemble formé par les échangeurs 17 et 18.

De préférence, le détendeur 7 du circuit primaire et les vannes du circuit secondaire sont à débit réglable en continu.

Le dispositif selon l'invention comporte enfin un calculateur 100 contrôlant le compresseur 3 et les différentes vannes et pompes en fonction notamment de mesures des températures T₁ à T₆ de la pile à combustible, du régénérateur de déshumidificateur, de l'air de l'habitacle, des batteries, du groupe de composants électroniques et du condenseur d'eau, respectivement, afin de fournir à leurs échangeurs respectifs une puissance thermique adaptée à leurs besoins.

Les figures 1 à 4 illustrent le fonctionnement du dispositif dans quatre situations principales, respectivement le démarrage à froid en été, le fonctionnement stabilisé, c'est-à-dire en dehors de la phase de démarrage, en été, le démarrage à froid en hiver, et le fonctionnement stabilisé en hiver.

La situation "en été", respectivement "en hiver" se réfère à une situation nécessitant un refroidissement, respectivement un chauffage, de l'habitacle.

Le tableau 1 ci-dessous résume les positions des différents organes du dispositif selon l'invention dans les différentes situations.

**Tableau 1**

| Situation | | Démarrage à froid, été | | Stabilisé été | Démarrage à froid, hiver | Stabilisé hiver |
|---|---|---|---|---|---|---|
| | | Figure 1 | T₁ suffisante | Figure 2 | Figure 3 | Figure 4 |
| Vannes | 23 | F | F | F | F | (0) |
| | 39 | F | F | F | F | (0) |
| | 72 | F | F | 0 | F | F |
| | 74 | F | F | 0 | F | F |
| | 68 | F | F | 0 | 0 | (0) |
| | 69 | 0 | 0 | 0 | 0 | F |
| | 93 | F | F | F | F | 0 |
| | 95 | F | F | F | F | 0 |
| Vannes à trois voies | 40 | 81-15 | 81-15 | F | 81-15 | 49-15(-81) |
| | 41 | 83-15 | 83-15 | F | 83-15 | 50-15(-83) |
| | 43 | 49-78 | 20-78 | 20-78 | 20-78 | 78-20-49 |
| | 47 | 50-79 | 20-79 | 20-79 | 20-79 | 79-20-50 |
| | 48 | F | 49-37* | 49-21 | F | 49-21 |
| | 64 | 9-66 | 9-66 | 9-66 | 9-66 | F |
| | | ou | ou | ou | ou | |
| | | 9-65 | 9-65 | 9-65 | 9-65 | |
| Vannes à quatre voies | 55 | 5-19 | 5-19 | 5-19 | 9-19 | indifférent |
| | | 9-69 | 9-69 | 9-69 | 5-69 | |
| | 57 | 5-19 | 5-19 | 5-19 | 9-19 | indifférent |
| | | 9-67 | 9-67 | 9-67 | 5-67 | |
| Compresseur | 3 | M | M | M | M | A |
| Pompes | 38 | M | M | M | A | M |
| | 45 | A | M | M | M | M |
| | 67 | M | M | M | M | A |

| | | | | | | |
|---|---|---|---|---|---|---|
| ( ) : signifie "si nécessaire" * : sous certaines conditions décrites ci-dessous 0 : Ouvert. F : Fermée (toutes les voies de la vanne sont fermées). xx-yy : met en connexion les organes repérés xx et yy A : A l'arrêt M : En marche | | | | | | |

Les flèches représentées sur les figures 1 à 4 indiquent les sens de circulation des fluides.

Le fonctionnement du circuit primaire est toujours le même. Quand le compresseur 3 est en marche (figures 1, 2 et 3), le fluide frigorigène comprimé par le compresseur 3 se condense, au moins en partie, dans le condenseur 5 en produisant de l'énergie calorifique, puis est détendu par le détendeur 7, s'évapore ensuite, au moins en partie, dans l'évaporateur 9 en produisant de l'énergie frigorifique, avant d'être comprimé à nouveau par le compresseur 3.

Le circuit parcouru par le fluide frigorigène est court et la quantité de ce dernier nécessaire au fonctionnement du dispositif selon l'invention est donc faible.

Le fonctionnement du circuit secondaire est adapté à chaque situation :

Dans la situation de démarrage en été (figure 1), l'habitacle est refroidi par circulation d'air autour de l'aérotherme 15, lui-même refroidi par des frigories produites par l'évaporation du fluide frigorigène dans l'évaporateur 9 et transportées par le fluide caloporteur, mis en circulation par la pompe 67, à travers les vannes 55, 69 et 40 jusqu'à l'aérotherme 15. Après réchauffement à travers l'aérotherme 15, le fluide caloporteur est transporté à travers les vannes 41 et 57 jusqu'à l'évaporateur 9, de manière à être refroidi à nouveau et pouvoir être réutilisé. Le fluide caloporteur circule ainsi en boucle dans un premier sous-circuit.

Avantageusement, pour limiter la production d'énergie frigorifique par le circuit frigorigène, et donc la consommation énergétique du compresseur 3, la vanne à trois voies 64 peut être positionnée de manière à permettre une circulation du fluide caloporteur à travers le système de stockage de froid 65. Ainsi l'énergie frigorifique, préalablement stockée dans le système 65 dans les situations où les besoins frigorifiques des différents échangeurs étaient inférieurs à la production d'énergie frigorifique dans l'évaporateur 9, est transférée au fluide caloporteur.

La faible consommation énergétique du compresseur 3 permet avantageusement de réduire la puissance demandée à la pile à combustible dans une situation où sa température n'est pas optimale et où son rendement est mauvais.

Au démarrage, la pile à combustible doit être réchauffée pour atteindre une température de fonctionnement optimal, c'est-à-dire permettant un bon rendement énergétique.

Le fluide caloporteur, mis en circulation par la pompe 38, est réchauffé par des calories produites par la condensation du fluide frigorigène dans le condenseur 5 lors de la traversée de ce dernier. Ainsi réchauffé, il traverse successivement les vannes 57 et 47 jusqu'à l'échangeur de pile 12 où il restitue de l'énergie calorifique à la pile, avant de retourner, par l'intermédiaire des vannes 43 et 55 jusqu'au condenseur 5. Le fluide caloporteur circule ainsi en boucle dans un deuxième sous-circuit indépendant du premier, c'est-à-dire que le fluide caloporteur ne se mélange pas à celui circulant dans le premier sous-circuit.

Avantageusement, une fraction du fluide caloporteur refroidi en provenance de l'échangeur de pile 12 traverse le condenseur d'eau 19 en s'y réchauffant, condensant, au moins en partie, la vapeur d'eau provenant de la pile et mise en contact avec le condenseur d'eau 19.

La traversée du condenseur d'eau 19 permet également, avantageusement, de fournir une partie de l'énergie calorifique destinée à la pile, et donc de soulager le compresseur 3 et/ou d'accélérer le chauffage de la pile, notamment quand le besoin en climatisation de l'habitacle est faible.

Quand la température de la pile T₁ est satisfaisante, par exemple parce qu'elle atteint environ 60°C, (situation non représentée) l'apport d'énergie calorifique à la pile doit cesser : Les vannes à trois voies 43 et 47 changent de position de manière à isoler l'échangeur de pile 12 du fluide caloporteur ayant traversé le condenseur 5 et à connecter le radiateur 20 et la pompe 45 au condenseur d'eau 19 et au condenseur 5. La pompe 45 se met en marche, ainsi, éventuellement, que le ventilateur 28.

Le fluide caloporteur, refroidi par la traversée du radiateur 20, traverse en se réchauffant le condenseur d'eau 19 et le condenseur 5. L'énergie calorifique produite dans ce dernier n'est pas souhaitée et est évacuée à travers le radiateur 20. Cette production d'énergie calorifique est cependant nécessaire pour permettre une production d'énergie frigorifique dans l'évaporateur 9.

Dans le cas où l'échangeur de pile 12 est incorporé dans la pile, la pompe 38 reste de préférence en marche et la vanne à trois voies 48 est positionnée de manière que le fluide caloporteur provenant de l'échangeur de pile 12, ne pouvant plus traverser le premier radiateur 20, soit détourné dans la branche de dérivation 37. La circulation du fluide caloporteur n'a plus alors pour objectif de chauffer la pile, mais, avantageusement, d'homogénéiser sa température.

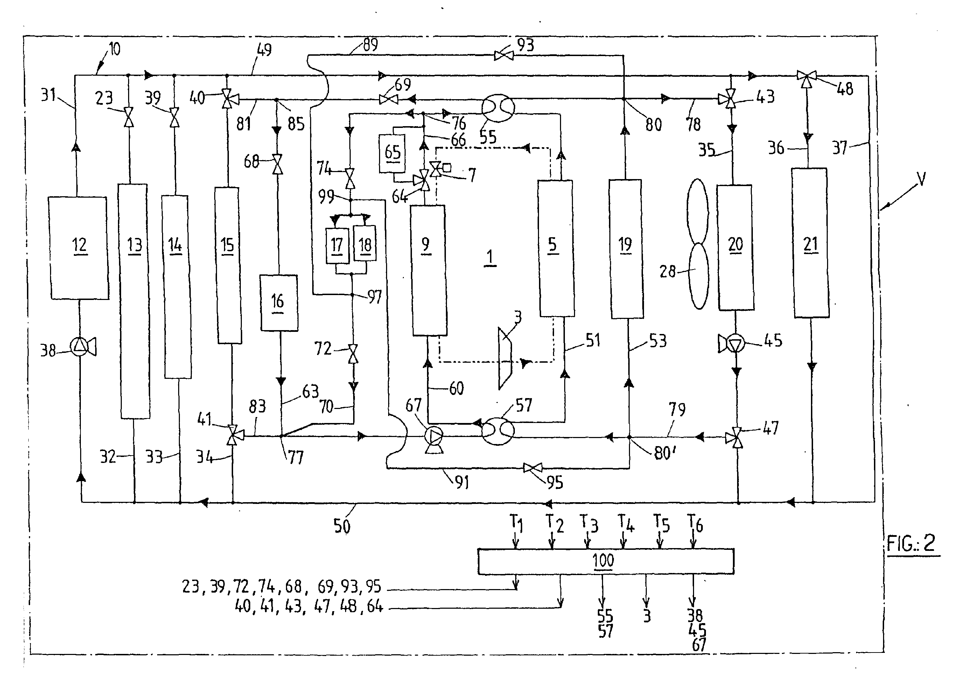

Dans la situation en fonctionnement stabilisé, en été (figure 2) l'habitacle, la pile, les composants électroniques et les batteries doivent être refroidis. Le tableau 1 indique les positions des différents organes du dispositif selon l'invention.

Le compresseur 3 est en marche de manière à produire de l'énergie frigorifique par évaporation du fluide frigorigène dans l'évaporateur 9. Après avoir traversé l'évaporateur 9, le fluide caloporteur traverse l'aérotherme 16 et les échangeurs 17 et 18 pour y transférer de l'énergie frigorifique à destination de l'habitacle, des batteries et des composants électroniques, respectivement.

Avantageusement, en fonctionnement stabilisé, la puissance frigorifique transmise à l'habitacle est plus faible que celle transmise au démarrage, l'aérotherme 16 ayant des dimensions plus petites que celles de l'aérotherme 15. L'énergie consommée par le compresseur 3 reste donc faible malgré la nécessité de refroidir, en plus de l'habitacle, les batteries et les composants électroniques.

Avantageusement, les deux aérothermes 15 et 16 sont de puissances d'échange thermique différentes. Par exemple l'aérotherme 16 est plus petit que l'aérotherme 15. Cette différence entre ces aérothermes permet une modularité avantageuse pour optimiser la consommation énergétique du compresseur.

En outre, avantageusement encore, par modification des positions des vannes 68, 40 et 41, il est possible d'utiliser l'aérotherme 16 seul, l'aérotherme 15 seul (figure 1) ou les deux échangeurs 15 et 16, afin de fournir une puissance frigorifique croissante à l'habitacle.

L'utilisation de l'énergie frigorifique stockée dans le système de stockage 65 permet avantageusement d'augmenter encore la puissance frigorifique délivrée à l'habitacle.

L'énergie calorifique transférée au fluide caloporteur dans le condenseur 5 et dans le condenseur d'eau 19 est évacuée vers l'extérieur du véhicule V par l'intermédiaire du radiateur 20, comme dans la situation précédemment décrite de démarrage à froid, en été, quand la température de la pile T₁ dépasse 60°C.

Le refroidissement de la pile ne nécessitant qu'une faible puissance frigorifique, le fluide caloporteur, mis en circulation par la pompe 38, traversant l'échangeur de pile 12, est refroidi à travers le radiateur 21, en boucle fermée.

Dans cette configuration, le circuit secondaire comporte ainsi trois sous-circuits indépendants correspondant aux circuits de refroidissement de la pile, de refroidissement de l'habitacle, des batteries et du groupe de composants électroniques, et de refroidissement du condenseur 5.

Si la température de la pile augmente en dépit de ce refroidissement (situation non représentée), les vannes 40 et 41 sont positionnées de manière qu'une partie du fluide caloporteur sortant de l'échangeur de pile 12 soit refroidie à travers l'aérotherme 15, qui ne peut plus alors être utilisé pour refroidir l'habitacle. L'air provenant de l'extérieur et s'échauffant au contact de l'aérotherme 15 est avantageusement renvoyé vers l'extérieur, de manière à ne pas contribuer au chauffage de l'habitacle. Les moyens de détournement du flux d'air vers l'extérieur sont décrits plus en détails ci-après (figure 5). Avantageusement, l'aérotherme 15 peut donc sélectivement servir d'aérotherme ou de radiateur extérieur.

Si la température de la pile augmente encore (situation non représentée), en dépit de l'évacuation de calories à travers le radiateur 21 et l'aérotherme 15, la vanne 39 est ouverte, autorisant ainsi la traversée de l'échangeur 14 par le fluide caloporteur en provenance de la pile. L'air frais sortant de l'habitacle vers l'extérieur et traversant l'échangeur 14 refroidit ainsi le fluide caloporteur avant qu'il ne retourne refroidir la pile à combustible.

Une partie des frigories transférée dans l'habitacle par l'intermédiaire de l'aérotherme 16 est donc utilisée pour refroidir la pile. Cette caractéristique est particulièrement avantageuse, ces frigories étant sinon rejetées vers l'extérieur et perdues.

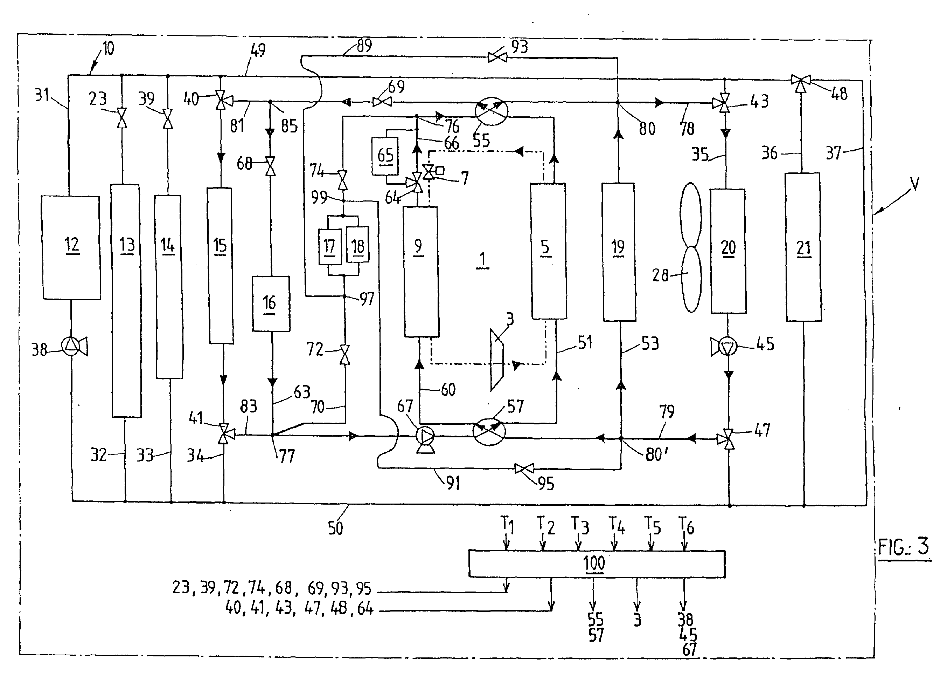

Dans la situation de démarrage à froid, en hiver (figure 3), l'habitacle a besoin de chauffage et la pile, les batteries et les composants électroniques ont éventuellement besoin d'être réchauffés.

Le compresseur 3 est en marche, mais les positions des vannes à quatre voies 55 et 57 sont inversées, de manière que l'énergie calorifique transférée au fluide caloporteur dans le condenseur 5 soit transportée jusqu'aux aérothermes 15 et 16 pour chauffer l'habitacle et de manière que l'énergie frigorifique transférée au fluide caloporteur dans l'évaporateur 9 soit évacuée vers l'extérieur par l'intermédiaire du radiateur 20. La vanne 64 peut également être positionnée de manière à recharger, si nécessaire, en énergie frigorifique le système de stockage de froid 65.

En sortie du radiateur 20, une fraction du fluide caloporteur traverse le condenseur d'eau 19, libérant des frigories de manière à condenser la vapeur d'eau en provenant de la pile, puis ainsi réchauffée, se mélange au fluide caloporteur provenant de l'évaporateur 9 avant de retourner au radiateur 20. Avantageusement, le radiateur 20 peut donc sélectivement servir de moyen d'évacuation d'énergie calorifique ou frigorifique vers l'extérieur.

La figure 3 illustre la situation où la pile, les batteries et les composants électroniques n'ont besoin d'aucune puissance thermique.

Dans cette situation, le circuit secondaire comporte deux sous-circuits indépendants, de chauffage de l'habitacle et d'évacuation de frigories par le radiateur 20.

Si la pile n'a pas besoin d'être chauffée et que l'échangeur de pile 12 est confondu avec la pile, une circulation de fluide caloporteur en boucle à travers les branches 31, 49, 37 et 50 peut avantageusement être établie pour homogénéiser la température de la pile et/ou fournir le débit nécessaire à l'humidificateur de la pile.

Si la pile a besoin d'être chauffée (situation non représentée), les vannes à trois voies 40 et 41 sont positionnées de manière que du fluide caloporteur provenant du condenseur 5 traverse l'échangeur de pile 12.

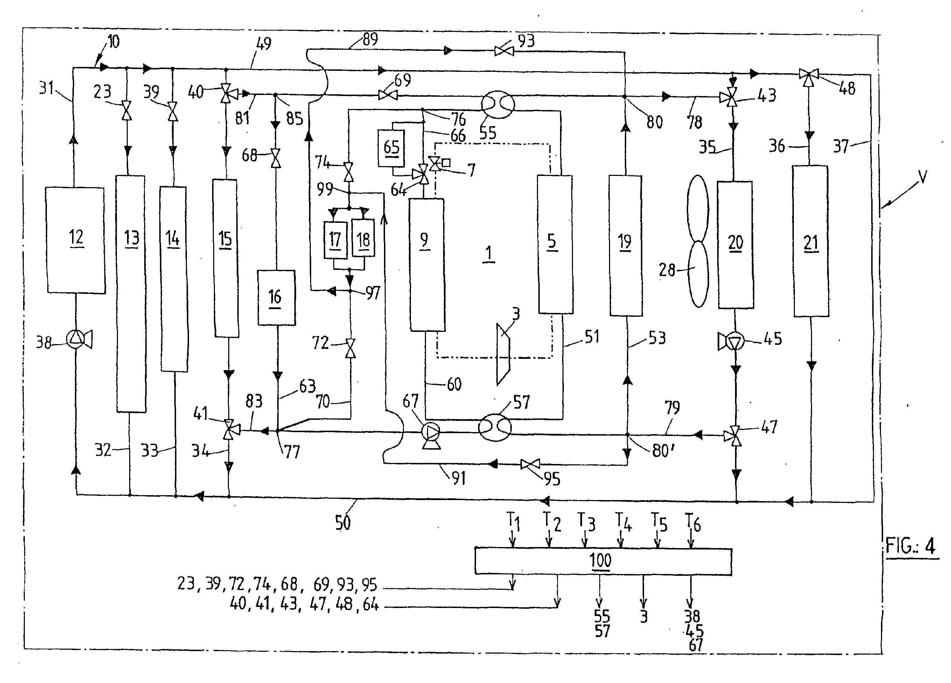

Dans la situation de fonctionnement stabilisé, en hiver (figure 4), l'énergie frigorifique nécessaire pour refroidir les batteries et les composants électroniques et le condenseur d'eau 19 est fournie par l'air extérieur par l'intermédiaire du radiateur extérieur 20.

Avantageusement, le compresseur 3 est à l'arrêt, ce qui permet une économie d'énergie.

L'énergie calorifique produite par la pile et transportée par le fluide caloporteur est en partie évacuée vers l'extérieur par l'intermédiaire du radiateur 21 et/ou de l'aérotherme 15, et/ou est évacuée vers l'habitacle par l'intermédiaire de l'échangeur 14 et/ou de l'aérotherme 15. Le fonctionnement de l'aérotherme 15, qui permet une évacuation des calories vers l'habitacle ou vers l'extérieur, est décrit plus en détail dans la suite de la description (figure 5).

Si ces moyens d'évacuation d'énergie calorifique sont insuffisants pour refroidir la pile, la vanne 23 est ouverte pour que le fluide caloporteur sortant de l'échangeur de pile 12 puisse être également avantageusement refroidi par le régénérateur de déshumidificateur 13.

La vanne 39 peut être également ouverte, de manière que l'air frais sortant de l'habitacle et traversant l'échangeur 14 contribue également, avantageusement, à ce refroidissement.

Les vannes 40, 41 et 68 peuvent en outre être complètement ouvertes de manière qu'une partie du fluide caloporteur sortant de l'échangeur de pile 12 traverse l'aérotherme 16 pour chauffer l'habitacle.

Enfin, en réglant la position des vannes 43 et 47, une fraction du fluide caloporteur provenant de l'échangeur de pile 12 peut se mélanger au fluide caloporteur provenant des échangeurs 17, 18 et 19 avant d'entrer dans le radiateur 20 pour y être refroidi. Cette fraction doit être déterminée pour que la température du fluide caloporteur retournant aux échangeurs 17, 18 et 19 permette toujours un refroidissement satisfaisant des batteries et des composants électroniques et une condensation suffisante de la vapeur d'eau en provenance de la pile traversant l'échangeur 19.

La figure 4 illustre la situation dans laquelle tous les moyens de refroidissement du fluide caloporteur en provenance de l'échangeur de pile 12 sont mis en oeuvre.

La figure 5 illustre un dispositif destiné à optimiser l'efficacité des aérothermes 15 et 16.

Ce dispositif comporte une conduite 101 d'amenée d'air extérieur, un premier volet 102, un deuxième volet 104, et des conduites 106 et 108 d'évacuation d'air vers l'extérieur et vers l'habitacle, respectivement.

Le fonctionnement de ce dispositif est le suivant :
L'air entre par la conduite 101 (flèche F1), est dirigé pour partie vers l'aérotherme 15 (flèche F2) et pour partie vers l'aérotherme 16 (flèche F3), selon la position du volet 102.

La position du deuxième volet 104 détermine les fractions de l'air ayant traversé l'aérotherme 15 évacuées vers l'extérieur (flèche F4) par la conduite 106 et vers l'habitacle (flèche F5) par la conduite 108, respectivement.

L'air ayant traversé l'aérotherme 16 est évacuée vers l'habitacle (flèche F6) par la conduite 108.

Avantageusement, ce dispositif permet de transformer l'aérotherme 15 en élément de chauffage ou de climatisation de l'habitacle, ou en moyen d'évacuation d'énergie vers l'extérieur du véhicule V.

Comme cela apparaît clairement à présent, le dispositif selon l'invention permet la régulation thermique d'un ou plusieurs échangeurs, et notamment la sélection de la production d'énergie calorifique ou d'énergie frigorifique dans cet échangeur, par action sur les moyens de connexion sélective insérés dans le circuit secondaire. Le circuit frigorigène est réduit à une simple boucle et peut ne comporter qu'un compresseur, un condenseur, un détendeur et un évaporateur. Le volume de fluide frigorigène est ainsi réduit à une quantité minimale.

Bien entendu, la présente invention n'est pas limitée au mode de réalisation décrit et représenté, fourni à titre d'exemple illustratif et non limitatif.

En particulier, le fonctionnement du dispositif selon l'invention n'est pas limité aux situations représentées sur les figures 1 à 4.

En outre, les différents échangeurs du circuit secondaire peuvent être en relation d'échange thermique avec des organes quelconques, en particulier différents de ceux décrits, avec l'habitacle du véhicule ou avec l'extérieur du véhicule. Par exemple, un échangeur tel que l'échangeur 20 ou l'échangeur 12 peut être en relation d'échange thermique avec la pile, l'extérieur, l'habitacle, les batteries ou d'autres organes du véhicule. L'invention concerne donc un dispositif de gestion thermique d'un ou plusieurs échangeurs agencés selon une architecture telle qu'illustrée sur les figures 1 à 4, ou équivalente, indépendamment de la destination de l'énergie calorifique ou frigorifique transférée par ce ou ces échangeurs.

## Revendications

1. Dispositif de gestion thermique d'au moins un premier échangeur thermique (20), notamment pour un véhicule automobile, comportant un circuit primaire frigorigène (1) dans lequel est amené à circuler un fluide frigorigène et dans lequel sont insérés en série au moins un compresseur (3), un condenseur (5), un détendeur (7), et un évaporateur (9), un circuit secondaire (10) dans lequel est amené à circuler un fluide caloporteur et dans lequel sont insérés au moins ledit premier échangeur thermique (20), et ledit condenseur (5) ou ledit évaporateur (9), ledit circuit secondaire (10) comportant des moyens de mise en circulation dudit fluide caloporteur (45), des première (35), deuxième (51) et troisième (60) branches parallèles dans lesquelles sont insérés ledit premier échangeur (20), ledit condenseur (5) et ledit évaporateur (9), respectivement, ledit circuit secondaire (10) comportant en outre des moyens de connexion sélective (55,57) de ladite première branche (35) avec ladite deuxième branche (51) ou ladite troisième branche (60), de manière à pouvoir sélectivement chauffer dans ledit condenseur (5) ou refroidir dans ledit évaporateur (9) le fluide caloporteur destiné à traverser ledit premier échangeur (20), ledit circuit secondaire (10) comportant au moins une quatrième branche (31) dans laquelle est inséré au moins un deuxième échangeur (12), et des moyens de connexion sélective (40,41,55,57) de ladite quatrième branche (31) avec ladite deuxième branche (51) ou ladite troisième branche (60) quand ladite première branche (35) est connectée sélectivement avec ladite troisième branche (60) ou ladite deuxième branche (51), respectivement, de manière à constituer deux sous circuits indépendants, et des moyens de mise en circulation (38,45) dudit fluide caloporteur dans lesdits sous-circuits, **caractérisé par le fait que** ledit circuit secondaire (10) comporte au moins une cinquième branche (63) dans laquelle est inséré un troisième échangeur (16), des moyens de connexion sélective (55,57) de ladite cinquième branche (63) avec une desdites deuxième (51) et troisième (60) branches de manière à constituer un premier sous-circuit, des moyens de connexion sélective (40,41,43,47) de ladite première branche (35) avec ladite quatrième branche (31) et/ou avec l'autre desdites deuxième (51) et troisième (60) branches de manière à constituer un deuxième sous-circuit indépendant dudit premier sous-circuit, et des moyens de mise en circulation (45,67) dudit fluide caloporteur dans lesdits premier et deuxième sous circuits.

2. Dispositif de gestion thermique selon la revendication 1 dans lequel le circuit secondaire (10) comprend des moyens de connexion (40, 41, 43, 47) pour constituer ledit deuxième sous-circuit, aptes à connecter de manière sélective la première branche (35) avec la quatrième branche (31), ou bien aptes à connecter de manière sélective la première branche (35) avec la quatrième branche (31) et avec l'autre de ladite deuxième (51) ou troisième (60) branche non raccordée à la cinquième branche (63) dans ledit premier sous-circuit.

3. Dispositif de gestion thermique selon la revendication 1 ou 2, **caractérisé en ce que** lesdits moyens de connexion sélective desdites première (35) et quatrième (31) branches avec lesdites deuxième (51) et troisième (60) branches comportent deux vannes à quatre voies (55,57) insérées aux deux points de jonction desdites première (35), deuxième (51), troisième (60) et quatrième (31) branches.

4. Dispositif de gestion thermique selon l'une quelconque des revendications précédentes, **caractérisé en ce que** ledit circuit secondaire (10) comporte des moyens de connexion sélective (43, 47, 55, 57) de ladite première branche (35) avec l'une ou plusieurs desdites deuxième (51), troisième (60) et quatrième (31) branches.

5. Dispositif de gestion thermique selon l'une quelconque des revendications précédentes, **caractérisé en ce que** ledit circuit secondaire (10) comporte au moins une sixième branche (36) dans laquelle est inséré un quatrième échangeur (21), des moyens de connexion sélective (55,57) de ladite cinquième branche (63) avec une desdites deuxième (51) et troisième (60) branches de manière à constituer un premier sous-circuit, des moyens de connexion sélective (43,47,55,57) de ladite première branche (35) avec l'autre desdites deuxième et troisième branches de manière à constituer un deuxième sous-circuit indépendant dudit premier sous-circuit, des moyens de connexion sélective (48) de ladite quatrième branche (31) avec ladite sixième branche (36) de manière à constituer un troisième sous-circuit indépendant desdits premier et deuxième sous circuits, et des moyens de mise en circulation (67,45,38) dudit fluide caloporteur dans lesdits premier, deuxième et troisième sous-circuits.

6. Dispositif de gestion thermique selon la revendication 5, **caractérisé en ce qu'**au moins deux aérothermes (15,16) de puissances d'échange thermique différentes et destinés au chauffage et à la climatisation dudit habitacle sont insérés respectivement dans deux desdites première (35), deuxième (51), troisième (60), quatrième (31), cinquième (63) et sixième (36) branches.

7. Dispositif de gestion thermique selon la revendication 6, **caractérisé en ce qu'**il comporte une conduite (101) d'amenée d'air aux deux dits aérothermes (15,16), un premier volet (102) disposé dans la trajectoire dudit air et dont la position détermine les fractions dudit air dirigées vers chacun des deux dits aérothermes (15,16), et un deuxième volet (104) disposé dans la trajectoire de l'air ayant traversé l'un desdits aérothermes (15) et dont la position détermine les fractions dudit air évacuées vers l'extérieur et vers ledit habitacle.

8. Dispositif de gestion thermique selon l'une quelconque des revendications précédentes, **caractérisé en ce que** ledit circuit secondaire (10) comporte au moins une septième branche de dérivation (37) dudit échangeur et des moyens de réglage du débit (48) dudit fluide caloporteur dans ladite branche de dérivation (37)

9. Dispositif de gestion thermique selon l'une quelconque des revendications précédentes, **caractérisé en ce qu'**un échangeur (16) est un aérotherme traversé par de l'air destiné à circuler dans un habitacle dudit véhicule.

10. Dispositif de gestion thermique selon l'une quelconque des revendications précédentes, **caractérisé en ce qu'**un échangeur (20) est un radiateur en relation d'échange thermique avec l'extérieur dudit véhicule.

11. Dispositif de gestion thermique selon l'une quelconque des revendications précédentes, **caractérisé en ce qu'**un échangeur (12) est en relation d'échange thermique avec un moteur.

12. Dispositif de gestion thermique selon la revendication 11, **caractérisé en ce que** le moteur en relation d'échange thermique avec l'échangeur (12) est une pile à combustible

13. Dispositif de gestion thermique selon l'une quelconque des revendications précédentes, **caractérisé en ce qu'**un échangeur (17) est en relation d'échange thermique avec au moins une batterie dudit véhicule.

14. Dispositif de gestion thermique selon l'une quelconque des revendications précédentes, **caractérisé en ce qu'**un échangeur (18) est en relation d'échange thermique avec un groupe de composants électroniques dudit véhicule.

15. Dispositif de gestion thermique selon l'une quelconque des revendications précédentes, **caractérisé en ce qu'**un échangeur (19) est en relation d'échange thermique avec un condenseur d'eau.

16. Dispositif de gestion thermique selon l'une quelconque des revendications précédentes, **caractérisé en ce qu'**un échangeur (13) est en relation d'échange thermique avec un déshumidificateur.

17. Dispositif de gestion thermique selon l'une quelconque des revendications précédentes, **caractérisé en ce qu'**un système de stockage de froid (65) est inséré dans au moins une desdites branches (60), ledit circuit secondaire (10) comportant en outre une branche de dérivation (66) dudit système de stockage de froid (65) et des moyens de régulation (64) du débit dudit fluide caloporteur dans ledit système de stockage de froid (65) et dans ladite branche de dérivation (66).

## Claims

1. Thermal management device for at least a first heat exchanger (20), especially for a motor vehicle, comprising a primary refrigeration circuit (1) in which a refrigerant is circulated and into which at least a compressor (3), a condenser (5), a regulator (7) and an evaporator (9) are inserted in series, a secondary circuit (10) in which a coolant is circulated and into which at least the said first heat exchanger (20) and the said condenser (5) or the said evaporator (9) are inserted, the said secondary circuit (10) comprising means for circulating the said coolant (45), parallel first (35), second (51) and third (60) branches into which the said first exchanger (20), the said condenser (5) and the said evaporator (9) are respectively inserted, the said secondary circuit (10) comprising in addition means (55, 57) for selectively connecting the said first branch (35) with the said second branch (51) or the said third branch (60) so as to be able selectively to heat in the said condenser (5) or cool in the said evaporator (9) the coolant that is to pass through the said first exchanger (20), the said secondary circuit (10) comprising at least a fourth branch (31) into which at least a second exchanger (12) is inserted, and means (40, 41, 55, 57) for selectively connecting the said fourth branch (31) with the said second branch (51) or the said third branch (60) when the said first branch (35) is selectively connected with the said third branch (60) or the said second branch (51), respectively, so as to constitute two independent subcircuits, and means (38, 45) for circulating the said coolant in the said subcircuits, **characterized in that** the said secondary circuit (10) comprises at least a fifth branch (63) into which a third exchanger (16) is inserted, along with means (55, 57) for selectively connecting the said fifth branch (63) with one of the said second (51) and third (60) branches so as to constitute a first subcircuit, means (40, 41, 43, 47) for selectively connecting the said first branch (35) with the said fourth branch (31) and/or with the other of the said second (51) and third (60) branches so as to constitute a second subcircuit, independent of the said first subcircuit, and means (45, 67) for circulating the said coolant in the said first and second subcircuits.

2. Thermal management device according to Claim 1, in which the secondary circuit (10) comprises means of connection (40, 41, 43, 47) in order to constitute the said second subcircuit, which are capable of connecting in a selective manner the first branch (35) with the fourth branch (31), or capable of connecting in a selective manner the first branch (35) with the fourth branch (31) and with the other of the said second (51) or third (60) branches which is not connected to the fifth branch (63) in the said first subcircuit.

3. Thermal management device according to Claim 1 or 2, **characterized in that** the said means for selectively connecting the said first (35) and fourth (31) branches with the said second (51) and third (60) branches comprise two four-way valves (55, 57) inserted at the two junctions of the said first (35), second (51), third (60) and fourth (31) branches.

4. Thermal management device according to any one of the preceding claims, **characterized in that** the said secondary circuit (10) comprises means (43, 47, 55, 57) for selectively connecting the said first branch (35) with one or more of the said second (51), third (60) and fourth (31) branches.

5. Thermal management device according to any one of the preceding claims, **characterized in that** the said secondary circuit (10) comprises at least a sixth branch (36) into which a fourth exchanger (21) is inserted, along with means (55, 57) for selectively connecting the said fifth branch (63) with one of the said second (51) and third (60) branches so as to constitute a first subcircuit, means (43, 47, 55, 57) for selectively connecting the said first branch (35) with the other of the said second and third branches so as to constitute a second subcircuit independent of the said first subcircuit, means (48) for selectively connecting the said fourth branch (31) with the said sixth branch (36) so as to constitute a third subcircuit independent of the said first and second subcircuits, and means (67, 45, 38) for circulating the said coolant in the said first, second and third subcircuits.

6. Thermal management device according to Claim 5, **characterized in that** at least two unit heaters (15, 16), of different heat exchange power and intended to heat and to air-condition the said passenger compartment, are respectively inserted into two of the said first (35), second (51), third (60), fourth (31), fifth (63) and sixth (36) branches.

7. Thermal management device according to Claim 6, **characterized in that** it comprises a line (101) feeding air to the said two unit heaters (15, 16), a first flap (102) placed in the trajectory of the said air and the position of which determines the fractions of the said air guided towards each of the two said unit heaters (15, 16), and a second flap (104) placed in the trajectory of the air that has passed through one of the said unit heaters (15) and the position of which determines the fractions of the said air discharges towards the outside and towards the said passenger compartment.

8. Thermal management device according to any one of the preceding claims, **characterized in that** the said secondary circuit (10) comprises at least a seventh branch (37) shunting the said exchanger and means (48) for regulating the flow rate of the said coolant in the said shunting branch (37).

9. Thermal management device according to any one of the preceding claims, **characterized in that** one exchanger (16) is a unit heater passed through by air intended to circulate in a passenger compartment of the said vehicle.

10. Thermal management device according to any one of the preceding claims, **characterized in that** one exchanger (20) is a radiator in a heat-exchange relationship with the outside of the said vehicle.

11. Thermal management device according to any one of the preceding claims, **characterized in that** one exchanger (12) is in a heat-exchange relationship with a motor.

12. Thermal management device according to Claim 11, **characterized in that** the motor in a heat-exchange relationship with the exchanger (12) is a fuel cell.

13. Thermal management device according to any one of the preceding claims, **characterized in that** one exchanger (17) is in a heat-exchange relationship with at least one battery of the said vehicle.

14. Thermal management device according to any one of the preceding claims, **characterized in that** one exchanger (18) is in a heat-exchange relationship with a group of electronic components of the said vehicle.

15. Thermal management device according to any one of the preceding claims, **characterized in that** one exchanger (19) is in a heat-exchange relationship with a water condenser.

16. Thermal management device according to any one of the preceding claims, **characterized in that** one exchanger (13) is in a heat-exchange relationship with a dehumidifier.

17. Thermal management device according to any one of the preceding claims, **characterized in that** a cold storage system (65) is integrated in at least one of the said branches (60), the said secondary circuit (10) comprising in addition a branch (66) shunting the said cold storage system (65) and means (64) for regulating the flow rate of the said coolant in the said cold storage system (65) and in the said shunting branch (66).

## Patentansprüche

1. Vorrichtung zur thermischen Steuerung wenigstens eines ersten Wärmetauschers (20), insbesondere für ein Kraftfahrzeug, mit einem primären Kühlkreis (1), in dem ein Kühlfluid zu einer Zirkulation gebracht wird und in den in Reihe wenigstens ein Kompressor (3), ein Kondensator (5), ein Druckminderer (7) und ein Verdampfer (9) eingesetzt sind, einem sekundären Kreis (10), in dem ein Wärmeübertragungsfluid zu einer Zirkulation gebracht wird und in den wenigstens der erste Wärmetauscher (20) und der Kondensator (5) oder der Verdampfer (9) eingesetzt sind, wobei der sekundäre Kreis (10) Mittel zum Versetzen des Wärmeübertragungsfluids (45) in Zirkulation, einen ersten Zweig (35), einen zweiten Zweig (51) und einen dritten Zweig (60), die zueinander parallel sind und in die der erste Wärmetauscher (20) bzw. der Kondensator (5) bzw. der Verdampfer (9) eingesetzt sind, enthält, wobei der sekundäre Kreis (10) außerdem Mittel (55, 57) zum wahlweisen Verbinden des ersten Zweigs (35) mit dem zweiten Zweig (51) oder mit dem dritten Zweig (60) enthält, derart, dass das Wärmeübertragungsfluid, das dazu bestimmt ist, sich durch den ersten Tauscher (20) zu bewegen, wahlweise im Kondensator (5) erwärmt oder im Verdampfer (9) gekühlt werden kann, wobei der sekundäre Kreis (10) wenigstens einen vierten Zweig (31) enthält, in den wenigstens ein zweiter Tauscher (12) eingesetzt ist, und Mittel (40, 41, 55, 57) zum wahlweisen Verbinden des vierten Zweigs (31) mit dem zweiten Zweig (51) oder mit dem dritten Zweig (60), wenn der erste Zweig (35) wahlweise mit dem dritten Zweig (60) oder mit dem zweiten Zweig (51) verbunden ist, enthält, derart, dass zwei unabhängige Unterkreise gebildet werden, und Mittel (38, 45) zum Versetzen des Wärmeübertragungsfluids in den Unterkreisen in Zirkulation enthält, **dadurch gekennzeichnet, dass** der sekundäre Kreis (10) wenigstens einen fünften Zweig (63), in den ein dritter Tauscher (16) eingesetzt ist, Mittel (55, 57) zum wahlweisen Verbinden des fünften Zweigs (63) mit dem zweiten Zweig (51) oder mit dem dritten zweig (60), derart, dass ein erster Unterkreis gebildet wird, Mittel (40, 41, 43, 47) zum wahlweisen Verbinden des ersten Zweigs (35) mit dem vierten Zweig (31) und/oder mit dem anderen des zweiten Zweiges (51) und des dritten Zweiges (60), derart, dass ein von dem ersten Unterkreis unabhängiger zweiter Unterkreis gebildet wird, und Mittel (45, 67) zum Versetzen des Wärmeübertragungsfluids in dem ersten und in dem zweiten Unterkreis in Zirkulation enthält.

2. Vorrichtung zur thermischen Steuerung nach Anspruch 1, in der der sekundäre Kreis (10) Verbindungsmittel (40, 41, 43, 47) enthält, um den zweiten Unterkreis zu bilden, die den ersten Zweig (35) wahlweise mit dem vierten Zweig (31) verbinden können oder den ersten Zweig (35) wahlweise mit dem vierten Zweig (31) und mit dem anderen des zweiten Zweigs (51) oder des dritten Zweigs (60), der nicht an den fünften Zweig (63) im ersten Unterkreis angeschlossen ist, verbinden können.

3. Vorrichtung zur thermischen Steuerung nach Anspruch 1 oder 2, **dadurch gekennzeichnet, dass** die Mittel zum wahlweisen Verbinden des ersten Zweigs (35) und des vierten Zweigs (31) mit dem zweiten Zweig (51) und mit dem dritten Zweig (60) zwei Vierwegeventile (55, 57) enthalten, die an zwei Verbindungspunkten des ersten Zweigs (35), des zweiten Zweigs (51), des dritten Zweigs (60) und des vierten Zweigs (31) eingesetzt sind.

4. Vorrichtung zur thermischen Steuerung nach einem der vorhergehenden Ansprüche, **dadurch gekennzeichnet, dass** der sekundäre Kreis (10) Mittel (43, 47, 55, 57) zum wahlweisen Verbinden des ersten Zweigs (35) mit dem zweiten Zweig (51) und/oder mit dem dritten Zweig (60) und/oder mit dem vierten Zweig (31) enthält.

5. Vorrichtung zur thermischen Steuerung nach einem der vorhergehenden Ansprüche, **dadurch gekennzeichnet, dass** der sekundäre Kreis (10) wenigstens einen sechsten Zweig (36), in den ein vierter Tauscher (21) eingesetzt ist, Mittel (55, 57) zum wahlweisen Verbinden des fünften Zweigs (63) mit dem zweiten Zweig (51) oder mit dem dritten Zweig (60), derart, dass ein erster Unterkreis gebildet wird, Mittel (43, 47, 55, 57) zum wahlweisen Verbinden des ersten Zweigs (35) mit dem anderen des zweiten und des dritten Zweigs, um einen von dem ersten Unterkreis unabhängigen zweiten Unterkreis zu bilden, Mittel (48) zum wahlweisen Verbinden des vierten Zweigs (31) mit dem sechsten Zweig (36), derart, dass ein von dem ersten und dem zweiten Unterkreis unabhängiger dritter Unterkreis gebildet wird, und Mittel (67, 45, 38) zum Versetzen des Wärmeübertragungsfluids in dem ersten, dem zweiten und dem dritten Unterkreis in Zirkulation enthält.

6. Vorrichtung zur thermischen Steuerung nach Anspruch 5, **dadurch gekennzeichnet, dass** wenigstens zwei Thermoblöcke (15, 16) mit unterschiedlichen Wärmetauschleistungen, die dazu bestimmt sind, den Fahrgastraum zu erwärmen und zu klimatisieren, in jeweils zwei Zweige des ersten Zweigs (35), des zweiten Zweigs (51), des dritten Zweigs (60), des vierten Zweigs (31), des fünften Zweigs (63) und des sechsten Zweigs (36) eingesetzt sind.

7. Vorrichtung zur thermischen Steuerung nach Anspruch 6, **dadurch gekennzeichnet, dass** sie eine Leitung (101) für die Zufuhr von Luft zu den zwei Thermoblöcken (15, 16), eine erste Klappe (102), die in der Bahn der Luft angeordnet ist und deren Stellung die Anteile der zu jedem der zwei Thermoblöcke (15, 16) geleiteten Luft bestimmt, und eine zweite Klappe (104), die in der Bahn der Luft, die sich durch einen der Thermoblöcke (15) bewegt hat, angeordnet ist und deren Stellung die Anteile der in die äußere Umgebung und in den Fahrgastraum abgeführten Luft bestimmt, enthält.

8. Vorrichtung zur thermischen Steuerung nach einem der vorhergehenden Ansprüche, **dadurch gekennzeichnet, dass** der sekundäre Kreis (10) wenigstens einen siebten Ableitungszweig (37) des Tauschers und Mittel (48) für die Regelung des Durchflusses des Wärmeübertragungsfluids in dem Ableitungszweig (37) enthält.

9. Vorrichtung zur thermischen Steuerung nach einem der vorhergehenden Ansprüche, **dadurch gekennzeichnet, dass** ein Tauscher (16) ein Thermoblock ist, durch den sich die Luft bewegt, die dazu bestimmt ist, in einem Fahrgastraum des Fahrzeugs zu zirkulieren.

10. Vorrichtung zur thermischen Steuerung nach einem der vorhergehenden Ansprüche, **dadurch gekennzeichnet, dass** ein Tauscher (20) ein Kühlkörper ist, der mit der äußeren Umgebung des Fahrzeugs in einer Wärmeaustauschbeziehung steht.

11. Vorrichtung zur thermischen Steuerung nach einem der vorhergehenden Ansprüche, **dadurch gekennzeichnet, dass** ein Tauscher (12) mit einem Motor in einer Wärmeaustauschbeziehung steht.

12. Vorrichtung zur thermischen Steuerung nach Anspruch 11, **dadurch gekennzeichnet, dass** der Motor, der mit dem Tauscher (12) in einer Wärmeaustauschbeziehung steht, eine Brennstoffzelle ist.

13. Vorrichtung zur thermischen Steuerung nach einem der vorhergehenden Ansprüche, **dadurch gekennzeichnet, dass** ein Tauscher (17) wenigstens mit einer Batterie des Fahrzeugs in einer Wärmeaustauschbeziehung steht.

14. Vorrichtung zur thermischen Steuerung nach einem der vorhergehenden Ansprüche, **dadurch gekennzeichnet, dass** ein Tauscher (18) mit einer Gruppe elektronischer Komponenten des Fahrzeugs in einer Wärmeaustauschbeziehung steht.

15. Vorrichtung zur thermischen Steuerung nach einem der vorhergehenden Ansprüche, **dadurch gekennzeichnet, dass** ein Tauscher (19) mit einem Wasserkühler in einer Wärmeaustauschbeziehung steht.

16. Vorrichtung zur thermischen Steuerung nach einem der vorhergehenden Ansprüche, **dadurch gekennzeichnet, dass** ein Tauscher (13) mit einem Entfeuchter in einer Wärmeaustauschbeziehung steht.

17. Vorrichtung zur thermischen Steuerung nach einem der vorhergehenden Ansprüche, **dadurch gekennzeichnet, dass** ein Kältespeichersystem (65) in wenigstens einen der Zweige (60) eingesetzt ist, wobei der sekundäre Kreis (10) außerdem einen Ableitungszweig (66) des Kältespeichersystems (65) und Mittel (64) zum Regulieren des Durchflusses des Wärmeübertragungsfluids in dem Kältespeichersystem (65) und in dem Ableitungszweig (66) enthält.
